# EUROPEAN PATENT APPLICATION

(11) **EP 2 319 696 A1**
(43) Date of publication of application: **11.05.2011**
(21) Application number: 09838290.6
(22) Date of filing: 14.01.2009
(51) Int. Cl.: B41J 2/52, H04N 1/46, H04N 1/60

(54) **PROGRAM, IMAGE FORMING METHOD, AND PRINTING SYSTEM**

(71) Applicant: Mimaki Engineering Co., Ltd., Tomi-shi, Nagano 389-0512 (JP)
(72) Inventor: IKEDA, Natsumi, Tomi-city Nagano 389-0512 (JP)
(74) Representative: Gendron, Vincent Christian
(86) International application number: PCT/JP2009/050380
(87) International publication number: WO 2010/082320

(57) **Abstract**

In a plurality of inkjet heads, variation of color reproduction characteristic of each of the inkjet heads is reduced appropriately.

In a program for making a computer execute an image formation processing, an output image creation processing (S54) is executed by the computer so that output image data are created on the basis of printing data. An inkjet printer is provided with a plurality of inkjet heads, which perform printing in a single pass system. The output image creation processing (S54) includes a rasterize processing (S62), a head common color conversion processing (S64) in which color conversion common to a plurality of the inkjet heads is executed by using one ICC profile, and an each head adjustment processing (S66) in which adjustment for reducing variation of color reproduction characteristic in each of a plurality of the inkjet heads is executed by using calibration information prepared for each of the inkjet heads.

## Description

### [Technical Field]

The present invention relates to a program, an image forming method and a printing system.

### [Background Art]

Conventionally, an inkjet printer in which printing is performed in a single pass system has been known. The inkjet printer is, for example, provided with a plurality of inkjet heads which are juxtaposedly arranged in a predetermined arrangement direction. Ink droplets are simultaneously ejected from a plurality of the inkjet heads to perform printing at a high speed.

### [Disclosure of the Invention]

### [Technical Problem]

However, in the structure described above, a color difference may occur in each of the inkjet heads due to, for example, individual differences of the inkjet heads and differences of their mounting accuracies and thus variation of color reproduction characteristics may occur. Therefore, in this case, for example, the variation of the color reproduction characteristics of the respective inkjet heads is required to restrain by an appropriate method.

In order to restrain the variation of color reproduction characteristics, for example, it is conceivable that, when an image formation processing such as an RIP processing is to be executed, color conversion is executed by using an ICC profile which is individually prepared for the respective inkjet head. However, in recent years, a processing amount in an image formation processing has increased due to improvement of printing resolution and thus, when an image formation processing is to be executed by the above-mentioned method, a required processing amount is largely increased and a time required for completion of the image formation processing is increased. As a result, it may be difficult that the image formation processing is executed at a high speed.

In addition, preparation of an ICC profile may require a working time, for example, more than one day through one week or more. Therefore, in order to individually prepare an ICC profile for each inkjet head, work man-hours are increased largely and thus remarkable reduction of working efficiency and increase of cost are occurred. Therefore, conventionally, for example, it is required that the variation of the color reproduction characteristics of the respective inkjet heads is restrained by a further appropriate method. In view of the problems described above, an objective of the present invention is to provide a program, an image forming method and a printing system which are capable of solving the problems.

After completion of the present invention, prior arts relating to the present invention have been searched and, as a result, in a case of performing a distributed printing by using a plurality of inkjet printers or the like, Patent Literatures are found in which a method for restraining individual differences of printing results of the respective devices is described (see, for example, Patent Literatures 1 through 3). For example, in the structure disclosed in Patent Literature 1, a plurality of color conversion informations corresponding to respective inkjet printers are respectively created and the corresponding color conversion tables are transmitted to a plurality of printers which are specified depending on the operating conditions.

However, these prior arts are not related to an inkjet printer in which printing is performed in a single pass system. Further, even when these prior arts are applied to a plurality of inkjet heads in an inkjet printer in which printing is performed in a single pass system, the present invention is not obtained.
- [Patent Literature 1]: Japanese Patent Laid-Open No. 2004-46339
- [Patent Literature 2]: Japanese Patent Laid-Open No. 2004-234391
- [Patent Literature 3]: Japanese Patent Laid-Open No. 2007-137013

### [Solution to Problem]

In order to attain the above-mentioned objective, the present invention provides the following structures.

### (Structure 1)

A program with which computer executes an image formation processing in which output image data are formed, the output image data being data representing image to be printed by a printing apparatus which performs printing in an inkjet method,
wherein the computer executes;
a printing data acquisition processing in which printing data are acquired, the printing data representing the image with a color of a color system that is not dependent on color reproduction characteristic of ink used in the printing apparatus; and
an output image creation processing in which the printing data are converted to the output image data representing the image with a color depending on color reproduction characteristic of the ink used in the printing apparatus to create the output image data;
wherein the printing apparatus is provided with a plurality of inkjet heads and printing is performed in a single pass system by the plurality of the inkjet heads; and
wherein the output image creation processing comprises;
a rasterize processing in which the image represented by the printing data is rasterized according to resolution of the printing apparatus;
a head common color conversion processing in which one ICC profile common to the plurality of the inkjet heads is used to execute common color conversion for the plurality of the inkjet heads; and
an each head adjustment processing in which adjustments for reducing variations of color reproduction characteristics of the plurality of the inkjet heads are executed by using calibration informations which are respectively prepared for the inkjet heads depending on the color reproduction characteristics of the inkjet heads.

The program is provided in a recorded state on a recording medium such as a CD-ROM and installed in a computer. The computer is, for example, a host computer which controls an operation of an inkjet printer. The computer is, for example, provided on the outside of the inkjet printer. Alternatively, the computer may be built in the inkjet printer. The program further makes, for example, the computer execute a data output processing. In the data output processing, for example, the computer outputs the output image data to a printing apparatus.

The output image creation processing is, for example, an RIP (Raster Image Processor) processing in which output image data are formed on the basis of printing data. The output image creation processing may further execute other processing in the RIP processing. For example, the output image creation processing may further execute a rendering processing or the like.

Further, a plurality of inkjet heads is a head array which can be individually exchanged in the inkjet printer and, for example, juxtaposedly disposed in a staggered arrangement. The inkjet head is, for example, an inkjet head for color printing. The inkjet head for color printing may be a head row in which a plurality of inkjet heads for single color from which ink of single color is ejected (hereinafter, referred to as a single color head) are juxtaposedly arranged. The plurality of the single color heads respectively eject, for example, inks of different primary colors. The inks of the primary colors are, for example, inks of colors of "C" (cyan), "M" (Magenta), "Y" (yellow) and "K" (black).

According to this structure, for example, a color difference occurred due to individual difference and difference of mounting accuracy in a plurality of the inkjet heads can be absorbed appropriately. Therefore, for example, variation of the color reproduction characteristic of each of the inkjet heads can be reduced appropriately.

Further, in this structure, when a processing using one ICC profile common to a plurality of the inkjet heads is separated from a processing using calibration information prepared for each of the inkjet heads, a processing except an each head adjustment processing, for example, a rasterize processing and a head common color conversion processing can be appropriately made common for a plurality of the inkjet heads. Therefore, according to this structure, the image formation processing can be appropriately executed at a high speed.

Further, in this structure, for example, different from a case that an ICC profile is individually prepared for each of the inkjet heads, only one common ICC profile may be prepared for a plurality of the inkjet heads. Therefore, according to this structure, for example, work man-hours required to prepare the ICC profile can be reduced remarkably.

In accordance with an embodiment of the present invention, the each head adjustment processing replaces, for example, color of data before or after or the like of conversion by the head common color conversion processing with color having a value after correction by the calibration information. According to this structure, correction corresponding to color reproduction characteristic in each of the inkjet heads can be executed appropriately.

As the calibration information, for example, information may be used which corrects one of values of device depending color and device independent color in the ICC profile. In this case, the calibration information makes, for example, a value of the device depending color or the device independent color in the ICC profile correspond to a value corrected depending on color reproduction characteristic of the corresponding inkjet head. For example, the calibration information makes a value of the device depending color in the ICC profile correspond to a value of the device depending color after correction. The calibration information may make a value of the device independent color in the ICC profile correspond to a value of the device independent color after correction.

Further, when the each head adjustment processing is a processing which is to be executed before the head common color conversion processing, for example, the each head adjustment processing executes adjustment for reducing variation of color reproduction characteristic for data created in a rasterize processing which is executed before the head common color conversion processing. In this case, for example, the calibration information makes a value of the device depending color used in the data created in the rasterize processing correspond to a value after correction.

The calibration information described above can be easily and appropriately prepared with reduced man-hours, for example, in comparison with an ICC profile. For example, the calibration information described above can be prepared for a time of several minutes to about several tens of minutes. Therefore, according to this structure, man-hours required to prepare data which are necessary for color conversion can be reduced appropriately. Further, according to this structure, variation of color reproduction characteristic of each of the inkjet heads can be reduced further appropriately.

In addition, since the calibration information is easily prepared, adjustment and re-preparation of the calibration information can be appropriately executed as needed. For example, different from a case that adjustment and re-preparation of an ICC profile itself are executed, a user for the printing apparatus is capable of preparing the calibration information or the like by oneself. Further, for example, the calibration information can be newly prepared before starting of daily working or the like. Therefore, according to this structure, for example, variation of color reproduction characteristic of each of the inkjet heads can be further flexibly reduced.

### (Structure 2)

The computer further executes;
a color chart printing execution processing in which a color chart that is previously set is printed by the plurality of the inkjet heads;
a color measurement result acquisition processing in which the color chart having been printed is measured with a colorimeter to acquire a color measurement (colorimetry) result with respect to a printing result of each of the plurality of the inkjet heads; and
a calibration information creation processing in which calibration informations respectively corresponding to the plurality of the inkjet heads are created on the basis of the color measurement results corresponded to the respective inkjet heads.

According to this structure, for example, the calibration information corresponding to color reproduction characteristic of each of the inkjet heads can be created appropriately. Therefore, for example, variation of color reproduction characteristic of each of the inkjet heads can be reduced appropriately.

In accordance with an embodiment of the present invention, in the color chart printing execution processing, the computer makes each of a plurality of the inkjet heads execute printing of a part of one color chart. Further, the colorimeter is, for example, provided on the outside of the computer.

### (Structure 3)

The output image creation processing is an RIP (Raster Image Processor) processing which forms the output image data on the basis of the printing data,
the color which is used in the printing data is device depending color which is dependent on color reproduction characteristic of a predetermined device,
the head common color conversion processing includes;
a first common color conversion processing which is a color conversion processing using a first ICC profile that is common to the plurality of the inkjet heads and in which the device depending color used in the printing data is converted into device independent color, and
a second common color conversion processing which is a color conversion processing using a second ICC profile that is common to the plurality of the inkjet heads and in which the device independent color after conversion by the first common color conversion processing is converted into device depending color which is dependent on color reproduction characteristic of the ink,
each of the inkjet heads ejects ink of at least respective colors of CMYK inks,
the each head adjustment processing is a processing which is executed after the second common color conversion processing, and
the calibration information is information which makes colors of CMYK color system correspond to colors of CMYK color system and the colors of CMYK color system in the ICC profile which is used in the second common color conversion processing are corresponded to colors which have been corrected for the respective inkjet heads.

According to this structure, for example, the each head adjustment processing can be executed appropriately and efficiently. Further, according to this structure, variation of color reproduction characteristic of each of the inkjet heads can be reduced further appropriately.

### (Structure 4)

The output image creation processing is an RIP (Raster Image Processor) processing which forms the output image data on the basis of the printing data,
the color which is used in the printing data is device depending color which is dependent on color reproduction characteristic of a predetermined device,
the head common color conversion processing includes;
a first common color conversion processing which is a color conversion processing using a first ICC profile that is common to the plurality of the inkjet heads and in which the device depending color used in the printing data is converted into device independent color, and
a second common color conversion processing which is a color conversion processing using a second ICC profile that is common to the plurality of the inkjet heads and in which the device independent color after conversion by the first common color conversion processing is converted into device depending color which is dependent on color reproduction characteristic of the ink,
the each head adjustment processing is a processing which is executed before the first common color conversion processing, and
the calibration information is information for correcting the device depending color which is used in the printing data and the device depending color before execution of the first common color conversion processing is corresponded to color which has been corrected for each of the inkjet heads.

According to this structure, for example, the each head adjustment processing can be executed appropriately and efficiently. Further, according to this structure, variation of color reproduction characteristic of each of the inkjet heads can be reduced further appropriately.

### (Structure 5)

The output image creation processing is an RIP (Raster Image Processor) processing which forms the output image data on the basis of the printing data,
the color which is used in the printing data is device depending color which is dependent on color reproduction characteristic of a predetermined device,
the head common color conversion processing includes;
a first common color conversion processing which is a color conversion processing using a first ICC profile that is common to the plurality of the inkjet heads and in which the device depending color used in the printing data is converted into device independent color, and
a second common color conversion processing which is a color conversion processing using a second ICC profile that is common to the plurality of the inkjet heads and in which the device independent color after conversion by the first common color conversion processing is converted into device depending color which is dependent on color reproduction characteristic of the ink,
the each head adjustment processing is a processing which is executed after the first common color conversion processing and before the second common color conversion processing, and
the calibration information is information for correcting the device independent color after conversion by the first common color conversion processing and the device independent color after conversion by the first common color conversion processing is corresponded to color which has been corrected for each of the inkjet heads.

According to this structure, for example, the each head adjustment processing can be executed appropriately and efficiently. Further, according to this structure, variation of color reproduction characteristic of each of the inkjet heads can be reduced further appropriately.

In the Structures 3 through 5 described above, the device independent color in the first and the second ICC profiles is, for example, a color expressed by the "Lab" color system. As the device independent color, a color expressed by the "XYZ" color system may be used. Further, the device depending color in the second ICC profile is, for example, a color expressed by the "CMYK" color system.

Further, in the output image creation processing, the each head adjustment processing may be executed plural times. For example, in the output image creation processing, the each head adjustment processing may be executed twice or three times by combining two or three of the above-mentioned Structures 3 through 5.

### (Structure 6)

The plurality of the inkjet heads are juxtaposedly arranged in a predetermined arrangement direction,
each of the inkjet heads is provided with a nozzle row formed of a plurality of nozzles which are arranged in the arrangement direction,
the plurality of the inkjet heads are juxtaposedly arranged so that an end of the nozzle row of one inkjet head and the other end of the nozzle row of adjacent inkjet head between two adjacent inkjet heads are juxtaposedly arranged so as to overlap with each other when viewed in a direction that is perpendicular to the arrangement direction,
the program further makes the computer execute a masking processing in which some nozzles in the nozzle row are selected as a nozzle from which ink is not ejected,
in the masking processing, the computer controls number of dots of inks ejected from respective positions of the nozzle row for an overlapping portion where two nozzle rows of the adjacent inkjet heads are overlapped with each other and selects the nozzle from which the ink is not ejected so that a visual density is gradually lowered from a center of the nozzle row toward an end part of the nozzle row.
The arrangement direction is, for example, a direction which is perpendicular to a conveyance direction of a medium.

According to this structure, for example, a difference between color reproduction characteristics of the overlapped portion and other portions is reduced and the overlapped portion is appropriately prevented from being conspicuous. Further, according to this structure, variation of color reproduction characteristic of each of the inkjet heads can be reduced further appropriately.

### (Structure 7)

An image forming method for forming output image data which represents image to be printed by a printing apparatus that performs printing in an inkjet method, the image forming method comprising:
a printing data acquisition step in which printing data are acquired, the printing data representing the image with a color of a color system that is not dependent on color reproduction characteristic of ink used in the printing apparatus; and
an output image creation step in which the printing data are converted to the output image data representing the image with a color depending on color reproduction characteristic of ink used in the printing apparatus to create the output image data;
wherein the printing apparatus is provided with a plurality of inkjet heads and printing is performed by the plurality of inkjet heads in a single pass system; and
wherein the output image creation step comprises;
   a rasterize step in which the image represented by the printing data is rasterized according to resolution of the printing apparatus;
   a head common color conversion step in which one ICC profile common to the plurality of the inkjet heads is used to execute common color conversion for the plurality of the inkjet heads; and
   an each head adjustment step in which adjustments for reducing variations of color reproduction characteristics in the plurality of the inkjet heads are executed by using calibration informations which are respectively prepared for the inkjet heads depending on the color reproduction characteristics of the inkjet heads.
According to this method, for example, similar effects to the above-mentioned Structure 1 can be obtained.

### (Structure 8)

A printing system comprising:
a printing apparatus which performs printing in an inkjet method; and
an image forming device for executing an image formation processing which forms output image data representing image to be printed by the printing apparatus;
wherein the printing apparatus is provided with a plurality of inkjet heads and printing is performed by the plurality of the inkjet heads in a single pass system; and
wherein the image forming device comprises;
   a printing data acquisition processing section in which printing data are acquired, the printing data representing the image with a color of a color system that is not dependent on color reproduction characteristic of ink used in the printing apparatus; and
   an output image creation processing section in which the printing data are converted to the output image data representing the image with a color depending on color reproduction characteristic of ink used in the printing apparatus to create the output image data;
wherein the output image creation processing section comprises;
   a rasterize processing section in which the image represented by the printing data is rasterized according to resolution of the printing apparatus;
   a head common color conversion processing section in which one ICC profile common to the plurality of the inkjet heads is used to execute common color conversion for the plurality of the inkjet heads; and
   an each head adjustment processing section in which adjustments for reducing variations of color reproduction characteristics in the plurality of the inkjet heads are executed by using calibration informations which are respectively prepared for the inkjet heads depending on the color reproduction characteristics of the inkjet heads.
According to this method, for example, similar effects to the above-mentioned Structure 1 can be obtained.

The image forming device is, for example, a computer which is provided on the outside of the inkjet printer. The computer operates as an image forming device, for example, according to a predetermined program. In this case, for example, a CPU of the computer operates as respective sections of the image forming device according to the program. The image forming device may be a computer which is built in the inkjet printer. Further, the image forming device may be structured of a plurality of computers.

### [Advantageous Effects of Invention]

According to the present invention, for example, variation of color reproduction characteristic of each of a plurality of the inkjet heads can be reduced appropriately.

### [Description of Embodiments]

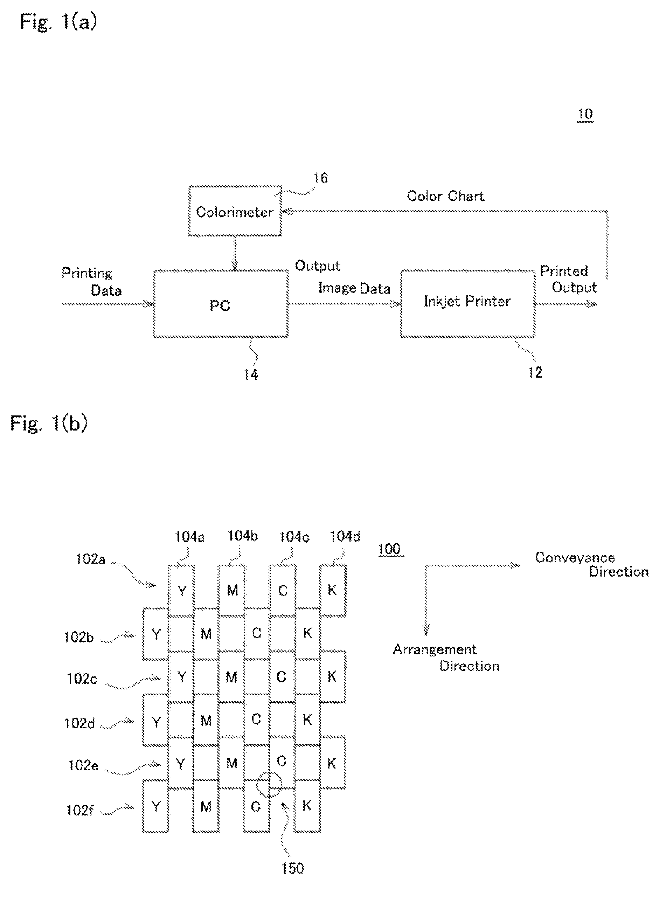

An embodiment of the present invention will be described below with reference to the accompanying drawings. Figs. 1(a) and 1(b) are views showing a structure of a printing system 10 in which a program in accordance with an embodiment of the present invention is used. Fig. 1(a) is a view showing a structure of the printing system 10. In this embodiment, the printing system 10 is provided with an inkjet printer 12, a colorimeter 16 and a PC 14.

The inkjet printer 12 is a printing apparatus in which printing is performed in a single pass system and is provided with a head part in which a plurality of head arrays that is an inkjet head for color printing are arranged in a juxtaposed manner. The inkjet printer prints an image by the head part on the basis of output image data which are obtained from the PC14.

Further, for example, in a case that the PC 14 executes creation of calibration information which is used for adjustment of color reproducibility or the like, the inkjet printer 12 prints a preset color chart according to an instruction of the PC 14. The calibration information is, for example, information which is used for adjustment of color conversion in an image formation processing.

The colorimeter 16 is, for example, a colorimeter which is the same as or similar to a well-known colorimeter. The colorimeter 16 is, for example, provided on the outside of the inkjet printer 12 and performs color measurement of a color chart which is printed with a plurality of head arrays of the inkjet printer 12.

The PC 14 is a host computer which is provided on the outside of the inkjet printer 12 and operates as an image forming device in the printing system 10 according to a program which has been previously installed. In this embodiment, the PC 14 stores an ICC profile corresponding to device characteristic of the inkjet printer 12 and executes an image formation processing on the basis of the ICC profile according to a program. In this embodiment, the image formation processing is an "RIP" processing. Further, in the image formation processing, the PC 14 forms output image data which are transferred to the inkjet printer 12. In the image formation processing, the PC 14 receives printing data such as a post script file or a PDF file from the outside to form output image data corresponding to the printing data.

The image formation processing in the PC 14 will be described further in detail below. The PC 14 may form output image data on the basis of printing data prepared by using application software on the PC 14.

Further, in this embodiment, the PC 14 acquires colorimetry results by the colorimeter 16 and creates calibration information on the basis of the colorimetry results. An operation for creating the calibration information will be described in detail below.

In a modified embodiment of the present invention, a structure corresponding to the entire or a part of the PC 14 which is an image forming device of the printing system 10 may be, for example, built in the inkjet printer 12. The image formation device of the printing system 10 may be structured of a computer, a database provided on the outside of the computer and the like. Further, the image formation device may be structured of a plurality of computers.

Fig. 1(b) is a view showing a structure of a head part 100 in the inkjet printer 12. In this embodiment, the head part 100 is provided with a plurality of head arrays 102a through 102f. Each of the plurality of the head arrays 102a through 102f is an inkjet head for color printing and can be individually exchanged in the inkjet printer 12. Further, each of the head arrays 102a through 102f is structured so that a plurality of single color heads 104a through 104d from which different inks of primary colors are respectively ejected is arranged in a juxtaposed manner.

In this embodiment, each of the respective head arrays 102a through 102f includes a single color head 104a for "Y" (yellow) color, a single color head 104b for "M" (Magenta) color, a single color head 104c for "C" (cyan) color, and a single color head 104d for "K" (black) color. The single color heads 104a through 104d are, for example, arranged in a juxtaposed manner in a conveyance direction of a medium.

Further, a plurality of the head arrays 102a through 102f is arranged, for example, in a staggered arrangement in a predetermined arrangement direction which is perpendicular to the conveyance direction. In this case, a plurality of the head arrays 102a through 102f is arranged so that respective end parts are overlapped with each other between adjacent head arrays 102a through 102f as shown by the portion surrounded with a circle 150 in the drawing.

In each of the head arrays 102a through 102f, each of the single color heads 104a through 104d is provided with a nozzle row in which a plurality of nozzles is arranged in the arrangement direction. In the nozzle rows, a plurality of the head arrays 102a through 102f is arranged so that an end of the nozzle row of one head array and the other end of the nozzle row of the adjacent head array are overlapped with each other between the adjacent head arrays 102a through 102f when viewed in a conveyance direction which is perpendicular to the arrangement direction.

Further, in the structure described above, the PC 14 executes a masking processing in which some nozzles in the nozzle row are selected as the nozzles from which ink is not ejected for the overlapped portion where the nozzle rows of the head arrays 102a through 102f are overlapped with each other. The masking processing will be also described in detail below.

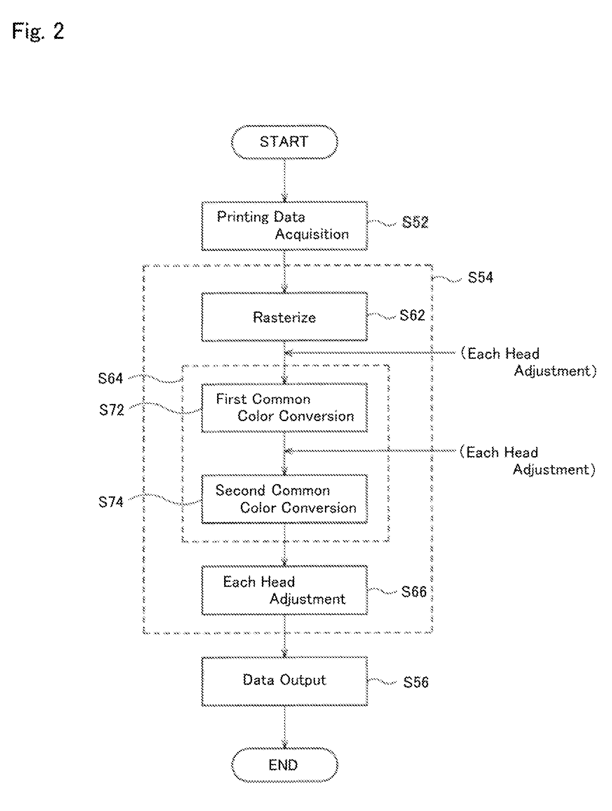

Next, an operation of the PC 14 will be described further in detail below. First, an operation of an image formation processing is described. Fig. 2 is a flow chart showing an operation of the image formation processing in the PC 14. The PC 14 executes the following operation, for example, according to a program having been installed in advance.

First, the PC 14 acquires printing data, for example, by application software executed in the outside computer or the PC 14 (printing data acquisition processing S52). The printing data is, for example, a post script file or a PDF file and an image to be printed is represented by a color of a color system which is independent to the color reproduction characteristic by ink that is used in the inkjet printer 12. In this embodiment, the color of the color system is, for example, a color of an RGB color system or the like. The device depending color may be a device depending color which is dependent on the color reproduction characteristic of a device on a side for preparing printing data.

Next, the PC 14 converts the printing data into output image data to create the output image data (output image creation processing S54). In this embodiment, the output image generation processing S54 is an RIP processing in which output image data representing image with colors of CMYK color system are created on the basis of the printing data. The colors of the CMYK color system are, for example, colors depending on color reproduction characteristics of CMYK inks which are used in the inkjet printer 12. Further, the output image data are, for example, data including developed raster image data and commands which are capable of being interpreted by the inkjet printer 12. The output image data may be data representing an image with a printer description language.

In the output image creation processing S54, first, the PC 14 performs rasterization of the image which is represented by the printing data according to the resolution of the inkjet printer 12 (rasterize processing S62). Next, color conversion is executed on a plurality of the head arrays 102a through 102f by using a common ICC profile (head common color conversion processing S64).

Further, in the head common color conversion processing S64 in this embodiment, the PC 14 executes two times of color conversion (first common color conversion processing S72 and second common color conversion processing S74). In the first common color conversion processing S72, the PC 14 executes color conversion with the use of a first ICC profile common to a plurality of the head arrays 102a through 102f and the device depending color which is used in the printing data is converted into a device independent color. The first ICC profile is, for example, an ICC profile in which a color expressed by the RGB color system is corresponded to a color expressed by the Lab color system.

Further, after the first common color conversion processing S72, in the second common color conversion processing S74, the PC 14 executes color conversion with the use of a second ICC profile common to a plurality of the head arrays 102a through 102f and the device independent color converted by the first common color conversion processing is converted into a device depending color which is dependent on the color reproduction characteristic of ink. The second ICC profile is, for example, an ICC profile in which a color expressed by the Lab color system is corresponded to a color expressed by the CMYK color system.

In this manner, the PC 14 executes color matching common to the head arrays 102a through 102f. In accordance with an embodiment of the present invention, the PC 14 may further execute another processing common to a plurality of the head arrays 102a through 102f before or after the rasterize processing S62 or the device common color conversion processing S64. For example, the PC 14 may further execute a rendering processing and the like.

Next, the PC 14 executes an individual adjustment of color conversion for each of the head arrays 102a through 102f (each head adjustment processing S66). In the each head adjustment processing S66, the PC 14 executes adjustment for reducing variation of the color reproduction characteristic in each of a plurality of the head arrays 102a through 102f by using calibration information prepared for each of the head arrays 102a through 102f.

In this embodiment, the calibration information is, for example, information which makes a color of the CMYK color system correspond to a color of the CMYK color system and the color of the CMYK color system in the ICC profile used in the second common color conversion processing S74 is corresponded to a color which has been corrected for each of the head arrays 102a through 102f. Further, the calibration information is, for example, prepared for each of the head arrays 102a through 102f depending on the color reproduction characteristic of each of the head arrays 102a through 102f.

As described above, the PC 14 executes the RIP processing based on the printing data to create output image data. Next, the PC 14 outputs the created output image data to the inkjet printer 12 (data output processing S56). As a result, the PC 14 makes the inkjet printer 12 execute a printing operation.

According to this embodiment, for example, color difference occurred due to individual difference and difference of mounting accuracy in a plurality of the head arrays 102a through 102f can be absorbed appropriately. Therefore, for example, variation of the color reproduction characteristic of each of the head arrays 102a through 102f can be reduced appropriately.

Further, since the processing using the ICC profile common to a plurality of the head arrays 102a through 102f is executed in a separated manner from the processing using the calibration information prepared for each of the head arrays 102a through 102f, for example, the processing except the each head adjustment processing can be appropriately made common for a plurality of the head arrays 102a through 102f. Therefore, according to this embodiment, for example, the image formation processing can be appropriately executed at a high speed.

In addition, in this embodiment, for example, different from a case that an ICC profile is individually prepared for each of the head arrays 102a through 102f, only the common ICC profile is prepared for a plurality of the head arrays 102a through 102f. Therefore, according to this embodiment, for example, work man-hours required to prepare the ICC profile can be reduced remarkably.

In accordance with an embodiment of the present invention, the PC 14 may execute the each head adjustment processing at a different timing from the above-mentioned embodiment. For example, the PC 14 may execute the each head adjustment processing before the first common color conversion processing S72. In this case, in the each head adjustment processing, color correction is executed on the created data by the rasterize processing S62. Further, for example, information for correcting the device depending color which is used in the printing data is used as the calibration information. The calibration information makes, for example, the device depending color, which is used in the data before execution of the first common color conversion processing, correspond to the color which has been corrected for each of the head arrays 102a through 102f.

Further, the PC 14 may execute the each head adjustment processing after the first common color conversion processing S72 and before the second common color conversion processing S74. In this case, as the calibration information, for example, information is used which corrects the device independent color after having been converted by the first common color conversion processing. The calibration information makes, for example, the device independent color after having been converted by the first common color conversion processing S72 correspond to the color which has been corrected for each of the head arrays 102a through 102f.

Further, the PC 14 may, for example, execute the each head adjustment processing at plural timings. For example, the each head adjustment processing may be executed at two or more timings among a timing before the first common color conversion processing S72, a timing after the first common color conversion processing S72, and a timing after the second common color conversion processing S74. In this case, the PC 14 executes the respective each head adjustment processings by using the calibration information corresponding to the respective timings.

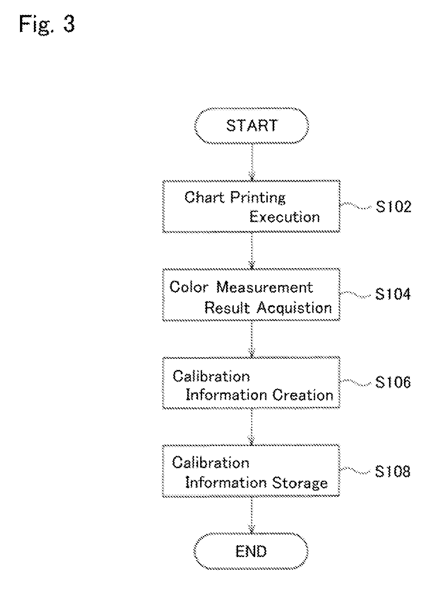

Next, an operation for creating the calibration information will be described blow. Fig. 3 is a flow chart showing an operation for creating the calibration information. The PC 14 executes the following operation, for example, according to a program having been installed in advance.

First, the PC 14 makes the inkjet printer 12 execute printing of a color chart (color chart printing execution processing S102). In this processing, the PC 14 makes, for example, each of a plurality of the head arrays 102a through 102f execute printing a part of one color chart. The color chart is, for example, a color chart including patches of respective primary colors and high order colors.

Next, after the colorimeter 16 has executed measurement of color for the printed color chart, the PC 14 acquires color measurement results by the colorimeter 16 (color measurement result acquisition processing S104). In this manner, the PC 14 acquires color measurement (colorimetry) result to the printing result of each of a plurality of the head arrays 102a through 102f.

Next, the PC 14 creates a plurality of calibration informations respectively corresponding to each of a plurality of the head arrays 102a through 102f on the basis of the acquired color measurement results (calibration information creation processing S106). In this processing, the PC 14 calculates, for example, color reproduction characteristic of each of the head arrays 102a through 102f on the basis of the color measurement results. Next, calibration information for reducing variation of the color reproduction characteristic is created on the basis of the calculated color reproduction characteristic. The variation of the color reproduction characteristic is, for example, the variation of the color reproduction characteristic which is generated when color conversion is executed by using only the common ICC profile.

After the calibration information creation processing S106, the PC 14 stores a plurality of calibration informations having been created, for example, to a storage device such as an HDD of the PC 14 (calibration information storage processing S108). In this processing, the PC 14 stores a plurality of the calibration informations so as to correspond to one ICC profile.

According to this embodiment, for example, the calibration information corresponding to the color reproduction characteristic of each of the head arrays 102a through 102f is created appropriately. Further, as a result, for example, the variation of the color reproduction characteristic of each of the head arrays 102a through 102f is reduced appropriately.

Further, the calibration information described above is, for example, easily and appropriately prepared with reduced man-hours in comparison with an ICC profile. Therefore, in addition, according to this embodiment, the variation of the color reproduction characteristic of each of the head arrays 102a through 102f is reduced appropriately without requiring a lot of man-hours for preparation of the data which are required for color conversion.

Further, since the calibration information is easily prepared, adjustment and re-preparation of the calibration information can be appropriately executed as needed. For example, different from a case that adjustment and re-preparation of an ICC profile itself are executed, a user for the inkjet printer 12 is capable of preparing the calibration information by oneself. Further, for example, the calibration information can be newly prepared before starting of daily working. Therefore, according to this structure, for example, the variation of the color reproduction characteristic of every inkjet printer 12 can be further flexibly executed.

In the calibration information creation processing S106, the PC 14 creates, for example, the calibration information by comparing the color chart having been printed with a reference color chart having been prepared previously. The reference color chart is, for example, a color chart which has been printed by the inkjet printer 12 in a state that adjustment for reducing the variation of the color reproduction characteristic has been performed on each of the head arrays 102a through 102f. As the color chart, for example, a color chart printed by the inkjet printer 12 prior to delivery from a factory, a color chart printed by the inkjet printer 12 at a specified date or the like may be used.

Further, in the calibration information creation processing S106, for example, the PC 14 makes with the color reproduction characteristic of one of the head arrays 102a through 102f as a reference, match the color reproduction characteristics of the others of the head arrays 102a through 102f to the reference. As the reference of the head arrays 102a through 102f, for example, the head array of the head arrays 102a through 102f whose performance of the color reproduction characteristic is the lowest may be used. According to this structure, the color reproduction characteristics of the others of the head arrays 102a through 102f are matched with the reference appropriately.

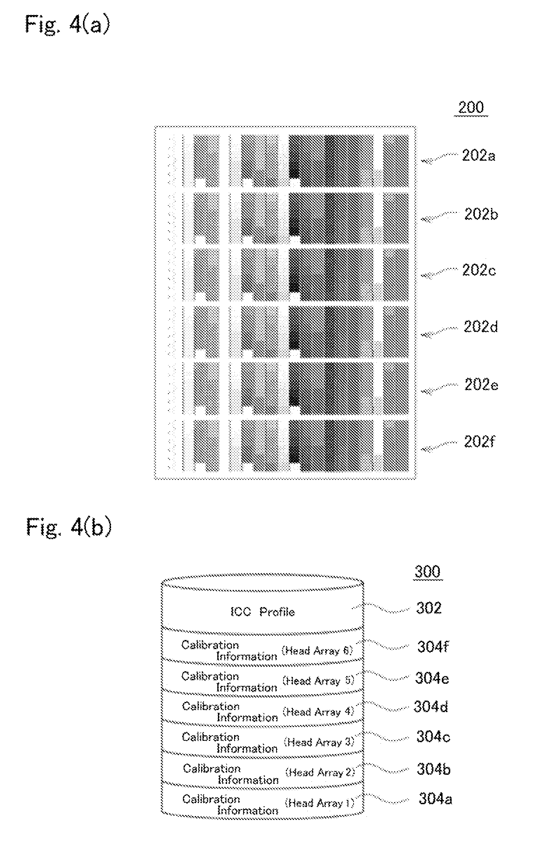

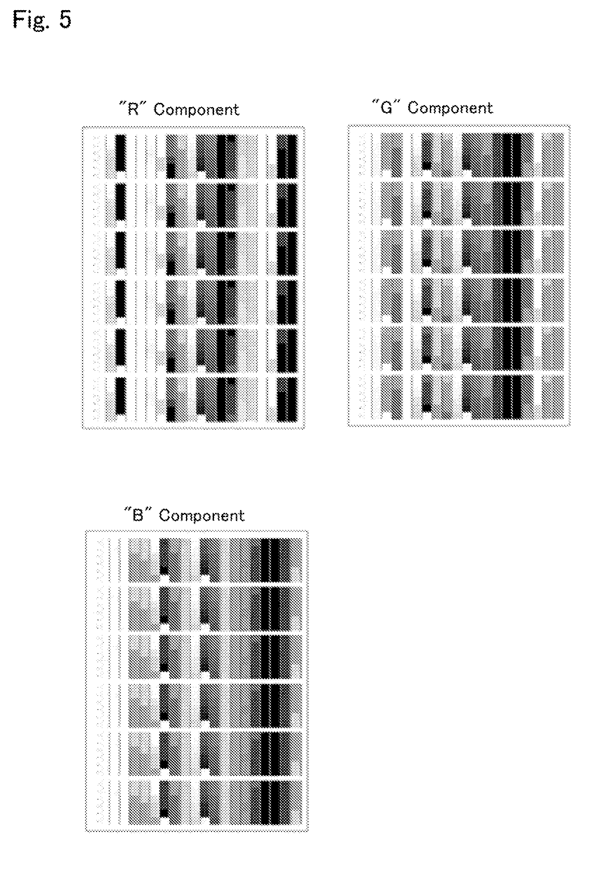

Figs. 4(a) and 4(b) and Fig. 5 are views for explaining adjustment of the head arrays 102a through 102f further in detail. Fig. 4(a) is a view showing an example of a color chart 200 which is printed in the color chart printing execution processing. In the color chart printing execution processing, the PC 14 makes the inkjet printer 12 print a color chart 200 provided with a plurality of head array corresponding portions 202a through 202f. Each of a plurality of the head array corresponding portions 202a through 202f is a portion which is printed by each of a plurality of the head arrays 102a through 102f. Further, each of the head array corresponding portions 202a through 202f itself is a color chart having patches of a primary color and a high order color of "Y" (yellow) color, "M" (Magenta) color, "C" (cyan) color and "K" (black) color.

For convenience of illustration, in Fig. 4(a), an image in which color tone of the color chart 200 is converted into gray scale. Color tones of the color chart 200 are shown in Fig. 5. Fig. 5 is a view showing the color tone of the color chart 200 in which the color tone of the color chart 200 is separately shown in an "R" component that is a red hue channel, a "G" component that is a green hue channel, and a "B" component that is a blue hue channel. As shown in the drawing, in this embodiment, the respective head array corresponding portions 202a through 202f which are printed by the head arrays 102a through 102f are patches with the same pattern.

According to this embodiment, for example, the colors of the printing results of the respective head array corresponding portions 202a through 202f are measured by the colorimeter 16 to appropriately acquire color measurement (colorimetry) results corresponding to the respective head arrays 102a through 102f in the color measurement result acquisition processing. Further, as a result, in the calibration information creation processing, the calibration information corresponding to each of the head arrays 102a through 102f is created appropriately.

Fig. 4(b) is a view showing a structure of an ICC profile 302 and a plurality of calibration informations 304a through 304f. In this embodiment, the PC 14 stores the ICC profile 302 and a plurality of the calibration informations 304a through 304f in one color conversion information file 300. Therefore, the PC 14 collectively stores the ICC profile 302 common to a plurality of the head arrays 102a through 102f and a plurality of the calibration informations 304a through 304f corresponding to a plurality of the head arrays 102a through 102f in a single file. According to this embodiment, for example, the ICC profile 302 and the calibration informations 304a through 304f can be managed and utilized appropriately.

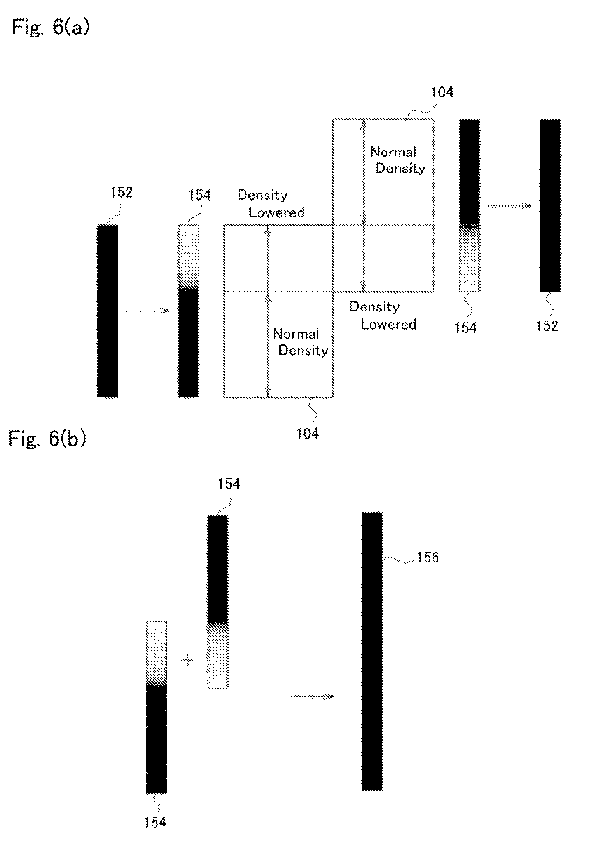

Figs. 6(a) and 6(b) are views for explaining a masking processing further in detail. Fig. 6(a) is a view showing an ink density 154 which is set in the masking processing. In the drawing, for convenience of description, only a pair of single color heads 104 are shown whose nozzle rows are partly overlapped with each other. The inkjet heads 104 for single color in the drawing are two of the inkjet heads 104a through 104d for single color (see Fig. 1(b)).

In this embodiment, the head arrays 102a through 102f (see Fig. 1(b)) adjacent to each other are arranged so that their end parts are overlapped with each other as shown in the portion surrounded by the circle 150 in Fig. 1(b). Therefore, overlapping portions are generated between the nozzle rows of the single color heads 104 in the respective head arrays 102a through 102f.

Therefore, for example, when the output image data after having been corrected by the calibration information 304 are printed as they are, the density of the overlapping portions becomes higher than those of other portions to cause to be conspicuous. In view of this situation, in this embodiment, the PC 14 controls the number of dots of ink ejected from the respective positions of a nozzle row from the center part toward an end part of the nozzle row in the overlapping portion. In other words, the PC 14 selects the nozzles from which ink is not ejected so that a visual density is gradually lowered.

For example, in a case that, in the output image data after having been corrected by the calibration information, the data 152 corresponding to two adjacent single color heads 104 after correction are data representing the same density, an ink density 154 of ink which is actually ejected from each of the respective inkjet heads 104 for single color is gradually lowered toward the end part of the nozzle row by the masking processing.

Fig. 6(b) is a view showing an example of a printing result 156 after the masking processing is executed. As shown in the drawing, in this embodiment, the respective single color heads 104 adjacent to each other of the head arrays 102a through 102f eject ink with the ink density 154 so that its visual density is gradually lowered toward the end part. In this case, in the printing result 156 of the overlapped portion, the density of the overlapped portion is not higher than those of the other portions. Therefore, according to this embodiment, for example, printing is appropriately executed while appropriately preventing the overlapped portion from being conspicuous.

In order to set the density of the overlapped portion to be the same as other portions, it may be conceivable that, for example, the overlapped portion is divided at its center and each of the divided regions is printed with a single color head 104. However, in this case, even when the variations of the color reproduction characteristics of the respective head arrays 102 are reduced, the boundary portion may become conspicuous due to a slight difference of the characteristics. On the other hand, according to this embodiment, since the ink density is gradually varied, the boundary portion is further appropriately prevented from being conspicuous. Therefore, according to this embodiment, the variations of the color reproduction characteristics of the respective head arrays 102a through 102f are reduced further appropriately.

Although the present invention has been shown and described with reference to a specific embodiment, the technical scope of the present invention is not limited to the embodiment described above. Various changes and modifications will be apparent to those skilled in the art from the teachings herein. It is clear from the description of the claims that embodiments to which the various changes and modifications are applied are included in the technical scope of the present invention.

### [Industrial Applicability]

The present invention may be, for example, preferably utilized in a printing system.

### [Brief Description of Drawings]

[Fig. 1]
   Figs. 1(a) and 1(b) are views showing a structure of a printing system 10 in which a program in accordance with an embodiment of the present invention is used. Fig. 1(a) is a view showing an example of a structure of a printing system 10. Fig. 1(b) is a view showing an example of a structure of a head part 100 in an inkjet printer 12.
[Fig. 2]
   Fig. 2 is a flow chart showing an example of an operation of an image formation processing in PC 14.
[Fig. 3]
   Fig. 3 is a flow chart showing an example of an operation for creating calibration information.
[Fig. 4]
   Figs. 4(a) and 4(b) are views for explaining adjustment of head arrays 102a through 102f further in detail. Fig. 4(a) is a view showing an example of a color chart 200 which is printed in a color chart printing execution processing. Fig. 4(b) is a view showing an example of a structure of an ICC profile 302 and a plurality of calibration informations 304a through 304f.
[Fig. 5]
   Fig. 5 is a view showing color tones of the color chart 200.
[Fig. 6]
   Figs. 6(a) and 6(b) are views for explaining a masking processing further in detail. Fig. 6(a) is a view showing an example of ink density 154 set in a masking processing. Fig. 6(b) is a view showing an example of printed result 156 after a masking processing has been performed.

### [Reference Signs List]

10... printing system, 12... inkjet printer, 14... PC, 16... colorimeter, 100... head part, 102a, 102b, 102c, 102d, 102e, 102f ... head array, 104a, 104b, 104c, 104d, 104e, 104f ... single color head, 152...data after having been corrected, 154... ink density, 156... printing result, 200... color chart, 202a, 202b, 202c, 202d, 202e, 202f... head array corresponding portion, 300... color conversion information file, 302... ICC profile, 304a, 304b, 304c, 304d, 304e, 304f... calibration information

## Claims

1. A program with which computer executes an image formation processing in which output image data are formed, the output image data being data representing image to be printed by a printing apparatus which performs printing in an inkjet method,
wherein the computer executes;
a printing data acquisition processing in which printing data are acquired, the printing data representing the image with a color of a color system that is not dependent on color reproduction characteristic of ink used in the printing apparatus; and
an output image creation processing in which the printing data are converted to the output image data representing the image with a color depending on color reproduction characteristic of ink used in the printing apparatus to create the output image data;
wherein the printing apparatus is provided with a plurality of inkjet heads and printing is performed by the plurality of the inkjet heads in a single pass system; and
wherein the output image creation processing comprises;
a rasterize processing in which the image represented by the printing data is rasterized according to resolution of the printing device;
a head common color conversion processing in which one ICC profile common to the plurality of the inkjet heads is used to execute common color conversion for the plurality of the inkjet heads; and
an each head adjustment processing in which adjustments for reducing variations of color reproduction characteristics of the plurality of the inkjet heads are executed by using calibration informations which are respectively prepared for the inkjet heads depending on the color reproduction characteristics of the inkjet heads.

2. The program according to claim 1, wherein the computer further executes;
a color chart printing execution processing in which a color chart that is previously set is printed by the plurality of the inkjet heads;
a color measurement result acquisition processing in which the color chart having been printed is measured with a colorimeter to acquire a color measurement result with respect to a printing result of each of the plurality of the inkjet heads; and
a calibration information creation processing in which calibration informations respectively corresponding to the plurality of the inkjet heads are created on a basis of the color measurement results corresponded to the respective inkjet heads.

3. The program according to claim 1 or 2, wherein
the output image creation processing is an RIP(Raster Image Processor) processing which forms the output image data on the basis of the printing data,
the color which is used in the printing data is device depending color which is dependent on color reproduction characteristic of a predetermined device,
the head common color conversion processing includes;
a first common color conversion processing which is a color conversion processing using a first ICC profile that is common to the plurality of the inkjet heads and in which the device depending color used in the printing data is converted into device independent color, and
a second common color conversion processing which is a color conversion processing using a second ICC profile that is common to the plurality of the inkjet heads and in which the device independent color after conversion by the first common color conversion processing is converted into device depending color which is dependent on color reproduction characteristic of the ink,
the inkjet heads eject at least inks of respective colors of CMYK inks, the each head adjustment processing is a processing which is executed after the second common color conversion processing, and
the calibration information is information which makes colors of CMYK color system correspond to colors of CMYK color system and the colors of CMYK color system in the ICC profile which is used in the second common color conversion processing are corresponded to colors which have been corrected for the respective inkjet heads.

4. The program according to one of claims 1 through 3, wherein
the output image creation processing is an RIP (Raster Image Processor) processing which forms the output image data on the basis of the printing data,
the color which is used in the printing data is device depending color which is dependent on color reproduction characteristic of a predetermined device,
the head common color conversion processing includes;
a first common color conversion processing which is a color conversion processing using a first ICC profile that is common to the plurality of the inkjet heads and in which the device depending color used in the printing data is converted into device independent color, and
a second common color conversion processing which is a color conversion processing using a second ICC profile that is common to the plurality of the inkjet heads and in which the device independent color after conversion by the first common color conversion processing is converted into device depending color which is dependent on color reproduction characteristic of the ink,
the each head adjustment processing is a processing which is executed before the first common color conversion processing, and
the calibration information is information for correcting the device depending color which is used in the printing data and the device depending color before execution of the first common color conversion processing is corresponded to color which has been corrected for each of the inkjet heads.

5. The program according to one of claims 1 through 4, wherein
the output image creation processing is an RIP (Raster Image Processor) processing which forms the output image data on the basis of the printing data,
the color which is used in the printing data is device depending color which is dependent on color reproduction characteristic of a predetermined device,
the head common color conversion processing includes;
a first common color conversion processing which is a color conversion processing using a first ICC profile that is common to the plurality of the inkjet heads and in which the device depending color used in the printing data is converted into device independent color, and
a second common color conversion processing which is a color conversion processing using a second ICC profile that is common to the plurality of the inkjet heads and in which the device independent color after conversion by the first common color conversion processing is converted into device depending color which is dependent on color reproduction characteristic of the ink,
the each head adjustment processing is a processing which is executed after the first common color conversion processing and before the second common color conversion processing, and
the calibration information is information for correcting the device independent color after conversion by the first common color conversion processing and the device independent color after conversion by the first common color conversion processing is corresponded to color which has been corrected for each of the inkjet heads.

6. The program according to one of claims 1 through 5, wherein
the plurality of the inkjet heads are juxtaposedly arranged in a predetermined arrangement direction,
each of the inkjet heads is provided with a nozzle row formed of a plurality of nozzles which are arranged in the arrangement direction,
the plurality of the inkjet heads are juxtaposedly arranged so that an end of the nozzle row of one inkjet head and an other end of the nozzle row of adjacent inkjet head between two adjacent inkjet heads are juxtaposedly arranged so as to overlap with each other when viewed in a direction that is perpendicular to the arrangement direction,
the program further makes the computer execute a masking processing in which some nozzles in the nozzle row are selected as a nozzle from which ink is not ejected,
in the masking processing, the computer controls number of dots of inks ejected from respective positions of the nozzle row for an overlapping portion where two nozzle rows of the adjacent inkjet heads are overlapped with each other and selects the nozzle from which the ink is not ejected so that a visual density is gradually lowered from a center of the nozzle row toward an end part of the nozzle row.

7. An image forming method for forming output image data which represents image to be printed by a printing apparatus which performs printing in an inkjet method, the image forming method comprising:
a printing data acquisition step in which printing data are acquired, the printing data representing the image with a color of a color system that is not dependent on color reproduction characteristic of ink used in the printing apparatus; and
an output image creation step in which the printing data are converted to the output image data representing the image with a color depending on color reproduction characteristic of ink used in the printing apparatus to create the output image data;
wherein the printing apparatus is provided with a plurality of inkjet heads and printing is performed by the plurality of inkjet heads in a single pass system; and
wherein the output image creation step comprises;
a rasterize step in which the image represented by the printing data is rasterized according to resolution of the printing apparatus;
a head common color conversion step in which one ICC profile common to the plurality of the inkjet heads is used to execute common color conversion for the plurality of the inkjet heads; and
an each head adjustment step in which adjustments for reducing variations of color reproduction characteristics in the plurality of the inkjet heads are executed by using calibration informations which are respectively prepared for the inkjet heads depending on the color reproduction characteristics of the inkjet heads.

8. A printing system comprising:
a printing apparatus which performs printing in an inkjet method; and
an image forming device for executing an image formation processing which forms output image data representing image to be printed by the printing apparatus;
wherein the printing apparatus is provided with a plurality of inkjet heads and printing is performed by the plurality of inkjet heads in a single pass system; and
wherein the image forming device comprises;
a printing data acquisition processing section in which printing data are acquired, the printing data representing the image with a color of a color system that is not dependent on color reproduction characteristic of ink used in the printing apparatus; and
an output image creation processing section in which the printing data are converted to the output image data representing the image with a color depending on color reproduction characteristic of ink used in the printing apparatus to create the output image data;
wherein the output image creation processing section comprises;
a rasterize processing section in which the image represented by the printing data is rasterized according to resolution of the printing apparatus;
a head common color conversion processing section in which one ICC profile common to the plurality of the inkjet heads is used to execute common color conversion for the plurality of the inkjet heads; and
an each head adjustment processing section in which adjustments for reducing variations of color reproduction characteristics in the plurality of the inkjet heads are executed by using calibration informations which are respectively prepared for the inkjet heads depending on the color reproduction characteristics of the inkjet heads.
